# DEMANDE DE BREVET EUROPEEN

(11) **EP 1 679 468 A1**
(43) Date de publication de la demande: **12.07.2006**
(21) Numéro de dépôt: 05300931.2
(22) Date de dépôt: 16.11.2005
(51) Int. Cl.: F17C 13/08

(54) **Réservoir de gaz sous pression**

(30) Priorité: 11.01.2005 FR 0550093
(71) Demandeur: L'AIR LIQUIDE S.A., 75321 Paris Cédex 07 (FR)
(72) Inventeur: Barral, Katia, 78150, LE CHESNAY (FR); Cannet, Gilles, 95620, PARMAIN (FR)
(74) Mandataire: De Cuenca, Emmanuel Jaime

(57) **Abrégé**

Le réservoir comprend une structure d'enveloppe résistant à la pression (1), avantageusement de type composite, comportant une couche externe de protection comprenant, au voisinage des deux extrémités de l'enveloppe, des logements pour des organes de fixation d'une structure de support en forme de jupe (7), avantageusement munie de moyens de glisse ou roulement (15), et d'une structure de manutention (8) comportant une poignée (13) de manutention ou d'accrochage.

Applications aux réservoirs de gaz sous haute pression, notamment d'hydrogène.

## Description

La présente invention concerne les réservoirs de gaz sous pression, notamment pour le stockage de gaz sous une pression supérieure à 200 bars.

Les réservoirs de gaz sous pression se présentent généralement sous une forme cylindrique plus ou moins allongée qui pose des problèmes de stabilité, que le réservoir soit debout ou couché, de transport et de manipulation. Ces problèmes se trouvent accrus avec les réservoirs haute pression en matériau composite qui présente un fond bombé.

La présente invention a pour objet de proposer une architecture de réservoir de gaz sous pression permettant d'augmenter grandement la stabilité et la facilité de déplacement, tout en assurant une sécurité structurelle accrue, convenant pour une large gamme de gaz ou de mélanges gazeux à usage industriel ou médical.

Pour ce faire, selon une caractéristique de l'invention, le réservoir comprend une structure d'enveloppe résistant à la pression revêtue d'au moins une couche externe de protection comprenant au moins un logement de réception d'un organe de fixation d'une structure de support ou de manutention du réservoir.

Selon des caractéristiques plus particulières de l'invention :
- le réservoir comprend une structure support constitué par une jupe enveloppant au moins partiellement une extrémité du réservoir
- la jupe comprend un moyen de déplacement à faible coefficient de friction, par exemple un patin de glissement ou un organe de roulement
- le réservoir comprend une structure de manutention formant une poignée de manutention et/ou d'accrochage montée sur l'extrémité opposée du réservoir, la poignée s'étendant avantageusement sensiblement parallèlement à l'organe de roulement ou au patin pour permettre une pose à plat stable du réservoir
- le réservoir est du type à structure d'enveloppe composite, typiquement avec un chemisage, métallique ou en matériau plastique, recouvert d'une couche fibreuse extérieure de renforcement.

D'autres caractéristiques et avantages de l'invention ressortiront de la description suivante de mode de réalisation, donnés à titre illustratif mais nullement limitatif, faite en relation avec des dessins annexés, sur lesquels :
- la figure 1 représente schématiquement en coupe longitudinale partielle un mode de réalisation de la partie supérieure d'un réservoir de gaz selon l'invention ;
- les figures 2 - 4 représentent un mode de réalisation d'un réservoir selon l'invention en positions de roulage, d'accrochage et couché respectivement ; et
- la figure 5 est une vue analogue à la figure 1 de la partie inférieure d'un autre mode de réalisation d'une structure d'enveloppe de réservoir selon l'invention.

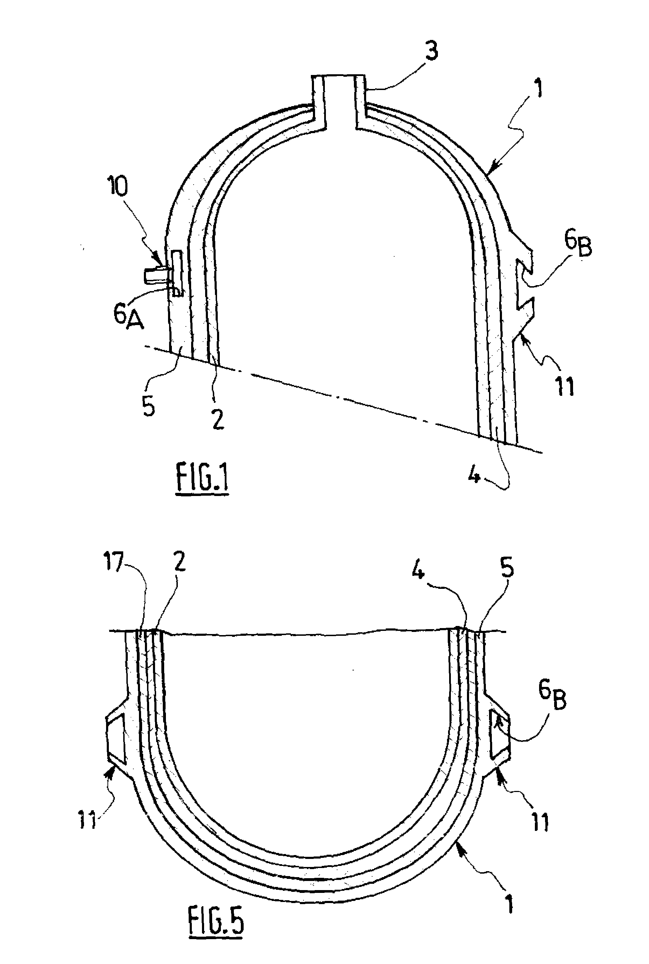

Sur la figure 1 on reconnaît la partie supérieure d'une structure d'enveloppe 1 de stockage de gaz en forme de bouteille d'architecture composite, constituée, de façon connue en soi, d'une chemise intérieure ou « liner » 2 étanche ou de très faible perméabilité aux gaz à stocker, typiquement en métal, en particulier en acier inoxydable, ou en matériau plastique haute densité, se raccordant à une structure de raccord d'extrémité 3 faisant saillie vers l'extérieur et revêtue extérieurement d'au moins une couche de renforcement 4, typiquement en fibres de carbone imprégnées de résine époxyde.

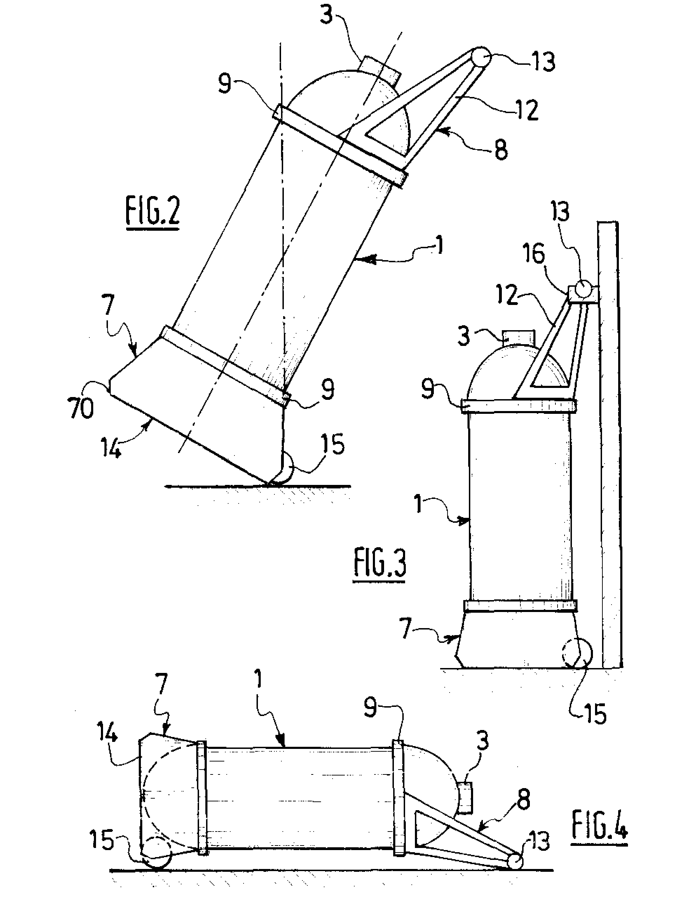

Selon un aspect de l'invention, cette couche de renforcement 4 est elle même revêtue d'une couche externe de protection 5, réalisée par exemple en fibres de verre et/ou aramide Rilsan™ (notamment type TWINTEX™ ou analogue), imprégnées de résine et formée localement, dans son épaisseur, au voisinage des extrémités opposées de l'enveloppe 1, typiquement au voisinage des extrémités de la partie de fût centrale cylindrique, avant son raccordement aux dômes d'extrémité avec plusieurs logements 6A, 6B angulairement répartis servant à recevoir un organe de fixation avec une structure de support ou de manutention du réservoir, typiquement, comme on le voit sur les figures 2-4, une jupe 7 de support et de transport et une structure de manutention et d'accrochage 8, chacune de ces structures comprenant une collerette d'extrémité 9 comprenant des organes de fixation adaptés pour coopérer avec ceux portés par la couche externe de protection 5. Cette dernière peut en outre contribuer à augmenter la tenue mécanique de la bouteille et/ou sa résistance à la pression des gaz.

Dans le mode de réalisation représenté sur la figure 1, on a représenté un de ces organes de fixation sous la forme d'un insert fileté 10, dont la tête est noyée dans la couche externe 5 lors de la mise en place de cette dernière autour de la couche 4 et sur lequel on peut visser un écrou de maintien d'une collerette 9. On a également représenté sur cette figure 1 un autre organe de fixation sous la forme d'un bossage 11 formant un logement 6B en forme de queue d'aronde obtenu par bobinage sur un moule en trois parties démonté après durcissement du composite, par usinage, ou par insertion / collage du bossage 11, la queue d'aronde 6B étant destinée à coopérer avec un tenon correspondant d'un collier 9, introduit par rotation du collier vis à vis de l'enveloppe 1.

Comme on le voit dans le mode de réalisation des figures 2 à 4, le collier de montage 9 de la structure de manutention 8 est avantageusement solidaire de deux triangles latéraux 12 dont les extrémités extérieures sont reliées par une poignée transversale 13. Le collier 9 de fixation de la structure de jupe 7 est quant à lui prolongé vers l'extérieur jusqu'au delà de l'extrémité hémisphérique de la structure d'enveloppe 1 (figure 4) par une partie en forme de tronc de pyramide présentant des arêtes d'extrémité telles que 70 empêchant le réservoir de rouler lorsqu'il est posé à plat dans une position autre que la position naturelle de pose à plat volontaire représenté sur la figure 4 et définissant à son extrémité libre une surface de pose 14 élargie et complétée, sur un de ses côtés, dans l'exemple représenté, par un rouleau 15 monté articulé dans les parois de la jupe 7. Selon un aspect de l'invention, les structures de jupe 7 et de manutention 8 sont montées sur la structure d'enveloppe 1 de façon que le rouleau 15 et la poignée 13 soient sensiblement parallèles, afin de permettre un déplacement aisé par glissement ou roulement, comme représenté sur la figure 2, et une pose à plat stable du réservoir, comme représenté sur la figure 4.

De plus, comme représenté sur la figure 3, la poignée 13 s'étendant entre les triangles 12 permet l'accrochage du réservoir 1 sur un crochet mural 14 ou toute autre attache sur la paroi d'un véhicule de transport, par exemple une ambulance, la poignée pouvant être verrouillée par un cadenas sur ce crochet 16.

Dans le mode de réalisation particulier représenté sur la figure 5, la couche de protection externe 5 est découplée de la couche de renforcement 4 par une couche intermédiaire 17 de mousse thermoplastique ou de feutre de fibres, par exemple de verre, présentant des capacités d'adsorption de choc pour améliorer encore la résistance au choc et aux vibrations du réservoir, s'étendant sur l'intégralité de la surface du réservoir ou, localement, sur des zones plus exposées, ou présentant des épaisseurs différentes selon les zones du réservoir.

Le réservoir selon l'invention convient pour le stockage de tous gaz sous pression, plus particulièrement sous des pressions supérieures à 200 bars, notamment d'hydrogène pour l'alimentation de pile à combustible ou d'oxygène pour utilisations médicales, dans des dimensions comparables à celles des bouteilles classiques avec une hauteur typiquement comprise entre 0,50 et 1 mètre.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

1. Réservoir de gaz sous pression, comprenant une structure d'enveloppe résistant à la pression (1) revêtue d'au moins une couche externe de protection (5) comprenant au moins un logement (6A, 6B) de réception d'un organe de fixation d'une structure de support (7) ou de manutention (8) du réservoir.

2. Réservoir selon la revendication 1, comprenant une structure support (7) constituée d'une partie de jupe enveloppant au moins partiellement une extrémité de la structure d'enveloppe (1).

3. Réservoir selon la revendication 2, **caractérisé en ce que** la partie de jupe comprend un moyen de déplacement à faible coefficient de friction (15).

4. Réservoir selon la revendication 3, **caractérisé en ce que** le moyen de déplacement comprend un organe de roulement (15).

5. Réservoir selon l'une des revendications 2 à 4, comprenant une structure de manutention (8) formant une poignée (13) de manutention ou d'accrochage montée sur l'extrémité opposée de la structure de réservoir (1).

6. Réservoir selon la revendication 3 et la revendication 5, **caractérisé en ce que** la poignée (13) est sensiblement parallèle à l'axe de l'organe de roulement (15).

7. Réservoir selon l'une des revendications précédentes, **caractérisé en ce que** la structure d'enveloppe est de type composite.

8. Réservoir selon la revendication 7, **caractérisé en ce que** la structure d'enveloppe comporte un chemisage interne (2) revêtu d'au moins une couche fibreuse de renforcement (4).

9. Réservoir selon la revendication 8, **caractérisé en ce que** la structure d'enveloppe comporte au moins localement une couche intermédiaire (17) en matériau adsorbant les chocs entre la couche externe de protection (5) et la couche de renforcement (4).

10. Réservoir selon l'une des revendications précédentes, **caractérisé en ce que** la couche externe de protection (5) est composée de fibres de verre ou aramide.
